# EUROPEAN PATENT SPECIFICATION

(11) **EP 2 448 177 B1**
(45) Date of publication and mention of the grant of the patent: **11.12.2013**
(21) Application number: 11187336.0
(22) Date of filing: 31.10.2011
(51) Int. Cl.: H04L 12/26

(54) **Dynamic qos tagging for rtp packets**
Dynamisches QOS-Tagging für RTP-Pakete
Étiquetage QOS dynamique pour des paquets RTP

(30) Priority: 29.10.2010 US 916281
(43) Date of publication of application: 02.05.2012
(73) Proprietor: Aruba Networks, Inc., Sunnyvale, CA 94089 (US)
(72) Inventor: Janakiraman, Ramsundar, Sunnyvale, CA California 94089 (US); Verma, Ravinder, 560103 Bangalore (IN); Bajpai, Rajneesh, San Jose, CA California 95135 (US); Xavier, Saji, 560001 Bangalore (IN)
(74) Representative: WP Thompson

(56) References cited:
- US-A1- 2009 010 259
- US-A1- 2009 135 834

## Description

### BACKGROUND OF THE INVENTION

The present invention relates to digital networks, and in particular, to delivering and managing reliable delivery of RTP streams.

Digital networks have rapidly become the backbone of many enterprises, small and large. Such networks are used for handling many different kinds of traffic. The RTP (Real-time Transport Protocol), as defined in RFC 1889 and RFC 3550 defines handling of streaming media commonly used for voice, video, telephony, and the like.

Many applications which use RTP to deliver streaming media such as voice or video perform end-to-end encryption on their signaling sessions, which render Application Level Gateways (ALGs) as part of firewalls useless. Encryption of RTP streams defeats attempts to recognize RTP streams based on simple pattern recognition and/or regular expression matching of RTP payload data, as encryption makes those RTP payloads unavailable for deep packet inspection. Additionally, identifying RTP packets just based on the protocol header fields can lead to false positives due to small static header patterns. An RTP recognition process needs to consider the recurring fields in the subsequent RTP packets to ensure determinism in RTP identification process.

What is needed is a way to improve handling of RTP streams passing through networks.

US 2009/0135834 A1 (Guntur) describes a technique for identifying RTP based traffic in routers and switches. Received IP packets include a UDP header and a second header located substantially after the UDP header. Statistical parameters are generated by inspecting a predetermined sequence of bits at predetermined offsets in the second header of each received IP packet for a predetermined number of IP packets. A determination is made whether the IP packet is an RTP based packet by comparing the generated statistical parameters to predetermined characteristics.

By contrast in accordance with a first aspect of the present invention there is a method of identifying a Real-time Transport Protocol (RTP) stream in a device attached to a digital network, the method comprises:
fingerprinting initial RTP packets in a stream received by the device by monitoring a preset number of initial incoming packets of the stream and caching information within packets of the initial incoming packets having RTP header patterns,
matching the cached information of the fingerprinted RTP packets to subsequent incoming packets of the stream, and
identifying the stream as a RTP stream if a predetermined number of matches occur.

According to a second aspect of the present invention, there is a machine readable medium having a set of instructions stored in nonvolatile form therein, which when executed on a device attached to a digital network causes a set of operations to be performed comprising:
fingerprinting initial RTP packets in a stream received by the device by monitoring preset number of initial incoming packets of the stream and caching information within packets of the initial incoming packets having RTP header patterns,
matching the cached information of the fingerprinted RTP packets to subsequent incoming packets of the stream, and
identifying the stream as an RTP stream if a predetermined number of matches occur, and
tagging the identified RTP stream.

### BRIEF DESCRIPTION OF THE DRAWINGS

The invention may be best understood by referring to the following description and accompanying drawings that are used to illustrate embodiments of the invention in which:

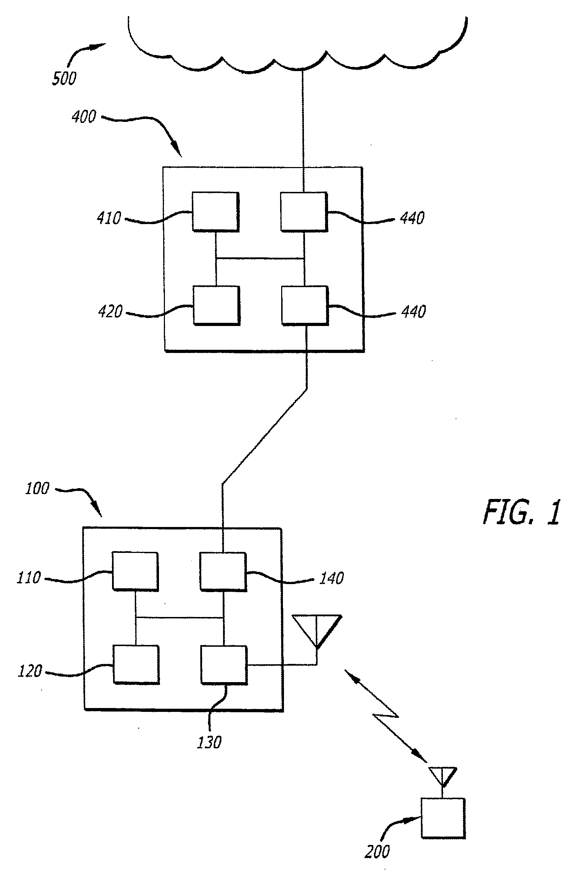

Fig. 1 shows clients in a network.

### DETAILED DESCRIPTION

Embodiments of the invention relate to methods of improving the handling of RTP streams in digital networks.

According to the present invention, a switching device in a digital network such as a controller, bridge, or access point examines streams flowing through the device. When the device detects that a session has been initiated, the device monitors the initial UDP packets of that stream until a predetermined number of packets have been monitored. The device monitors and fingerprints the header portion of UDP packets, looking for RTP header bit patterns, ignoring certain RTP packet types, and caching others. This fingerprinting process continues, attempting to match cached packet header information against subsequent packets in the stream to detect RTP streams deterministically. If the stream is determined to be an RTP stream, then the RTP type from the packet header is used to tag the stream. In one embodiment, such tags are QoS tags. Tagging may also be based on the control session port used.

Fig. 1 shows a network in which access points (APs) **100** are purpose-made digital devices, each containing a processor **110**, memory hierarchy **120**, and input-output interfaces **130**. In one embodiment of the invention, a MIPS-class processor such as those from Cavium or RMI is used. Other suitable processors, such as those from Intel or AMD may also be used. The memory hierarchy **120** traditionally comprises fast read/write memory for holding processor data and instructions while operating, and nonvolatile memory such as EEPROM and/or Flash for storing files and system startup information. Wired interfaces **140** are typically IEEE 802.3 Ethernet interfaces, used for wired connections to other network devices such as switches, or to a controller. Wireless interfaces **130** may be WiMAX, 3G, 4G, and/or IEEE 802.11 wireless interfaces. In one embodiment of the invention, APs operate under control of a LINUX operating system, with purpose-built programs providing host controller and access point functionality. Access points **100** typically communicate with a controller **400,** which is also a purpose-built digital device having a processor **410**, memory hierarchy **420**, and commonly a plurality of wired interfaces **440**. Access points **100** may also include devices operating as bridges, remote access points, and the like. Controller **400** provides access to network **500**, which may be a private intranet or the public internet.

Client devices **200** have similar architectures, chiefly differing in input/output devices; a laptop computer will usually contain a large LCD, while a handheld wireless scanner will typically have a much smaller display, but contain a laser barcode scanner.

The present invention deals with RTP (Real-time Transport Protocol) data streams, as defined in RFC 1889 and RFC 3550. RTP streams are typically used for the end-to-end transport of streaming media in real time, such as voice and/or video. RTP is based on UDP, a connectionless protocol. UDP is a simple transmission protocol, defined in RFC 768, without implicit hand-shaking dialogs for providing reliability, packet ordering, or data integrity. It is understood that UDP provides a service without reliability guarantees, and that UDP datagrams may arrive out of order, appear duplicated, or go missing without notice, assuming that error detection and correction if any is either not necessary or is performed in the client application.

It is common for applications using RTP streams to encrypt the payload portion of the RTP packet, leaving only the RTP header available for inspection. This encryption, such as applied by applications such as Microsoft OCS or SIP-over-IPSEC, cause methods of identifying RTP streams by deep packet inspection of RTP payloads to fall. Additionally, attempting to identify RTP packets just based on the protocol header fields can lead to false positives due to small static header patterns. An RTP identification process needs to consider the recurring fields in the subsequent RTP packets to ensure determinism in RTP identification process.

According to the present invention, a network device such as a controller, bridge, or access point monitors the traffic it is carrying to detect and tag RTP streams. Packets are fingerprinted and cached, the cached information being used to determine if the stream is an RTP stream.

The device monitors UDP packets for the session until a predetermined packet count has been reached. Additional optimization can be applied, by triggering the detection based on the initiation of active control sessions, for example, control sessions which are preconfigured on ports that the server listens on for SIP clients such as TCP:2000 or TCP:5060. In one embodiment, initial packets such as STUN, TURN, and ICE which are used to establish NAT traversal are ignored.

As part of the fingerprinting process, packets which match RTP header bit patterns are cached. This cached information includes selective RTP header information on the RTP flow state such as SSRC, CSRC and RTP type. The entire packet may be cached, or just the header portion of the packet header containing the fingerprinted information may be cached.

These cached packets for the stream are used to try and match subsequent packets in the stream to determine if the stream is an RTP stream or not.

If a predetermined number of matches occur, the stream is identified as an RTP stream.

Once the stream has been identified as an RTP stream, the RTP type field from the RTP header may be used to tag packets belonging to the stream. As an example, QoS (Quality of Service) tags may be added to speed reliable delivery of RTP streams identified as video or voice streams. The type of tag applied may also depend on the control session port.

The present invention may be realized in hardware, software, or a combination of hardware and software. The present invention may be realized in a centralized fashion in one computer system such as AP **100**, or in a distributed fashion where different elements are spread across several interconnected computer systems. A typical combination of hardware and software may be a controller or access point with a computer program that, when being loaded and executed, controls the device such that it carries out the methods described herein.

The present invention also may be embedded in nontransitory fashion in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

This invention may be embodied in other forms without departing from essential attributes thereof. Accordingly, reference should be made to the following claims, rather than to the foregoing specification, as indicating the scope of the invention.

## Claims

1. A method of identifying a Real-time Transport Protocol, RTP, stream in a device (100) attached to a digital network, the method comprises:
fingerprinting initial RTP packets in a stream received by the device by monitoring a preset number of initial incoming packets of the stream and caching information within packets of the initial incoming packets having RTP header patterns, the method **characterised in** comprising:
matching the cached information of the fingerprinted RTP packets to subsequent incoming packets of the stream, and
identifying the stream as a RTP stream if a predetermined number of matches occur.

2. The method of Claim 1, further comprising adding Quality of Service, QoS, tags to the identified RTP stream to identify the stream as a video stream or a voice stream.

3. The method of Claim 1 where fingerprinting of RTP packets comprises ignoring certain incoming packets.

4. The method of Claim 3 where the ignored packets include Session Travel Utilities for NAT, STUN, Traversal Using Relays around NAT, TURN, and Interactive Connectivity Establishment, ICE, packets.

5. The method of Claim 1 further comprising tagging the identified RTP stream.

6. The method of Claim 5 wherein the identified RTP stream is tagged based on the RTP type.

7. The method of Claim 5 wherein the identified RTP stream is tagged based on the control port.

8. The method of Claim 5 wherein the incoming packets are User Datagram Protocol, UDP, packets.

9. The method of Claim 1, wherein the matching of the cached information of the fingerprinted RTP packets to a remainder of the incoming packets comprises matching a Synchronization Source, SSRC, identifier obtained from the fingerprinted RTP packets with information within a header of each of the remainder incoming packets.

10. The method of Claim 1, wherein the matching of the cached information of the fingerprinted RTP packets to a remainder of the incoming packets comprises matching one of a Synchronization Source, SSRC, identifier and a Contributing Source, CSRC, identifier obtained from the fingerprinted RTP packets with information within a header of each of the remainder incoming packets.

11. A machine readable medium having a set of instructions stored in nonvolatile form therein, which when executed on a device (100) attached to a digital network (500) causes a set of operations to be performed comprising:
fingerprinting initial RTP packets in a stream received by the device by monitoring a preset V number of initial incoming packets of the stream and caching information within packets of the initial incoming packets having RTP header patterns, the machine readable medium **characterised by**:
matching the cached information of the fingerprinted RTP packets to subsequent incoming packets of the stream, and
identifying the stream as an RTP stream if a predetermined number of matches occur, and
tagging the identified RTP stream.

12. The machine readable medium of Claim 11 where the fingerprinting of the RTP packets further comprises ignoring certain packet types including Session Travel Utilities for NAT, STUN, Traversal Using Relays around NAT, TURN, and Interactive Connectivity Establishment, ICE, packets.

13. The machine readable medium of Claim 11 where the identified RTP stream is tagged based on the RTP type.

14. The machine readable medium of Claim 11 where the identified RTP stream is tagged based on the control port.

15. The machine readable medium of Claim 11, wherein the matching of the cached information of the fingerprinted RTP packets to a remainder of the incoming packets comprises matching a Synchronization Source, SSRC, identifier obtained from the fingerprinted RTP packets with information within a header of each of the remainder incoming packets.

16. The machine readable medium of Claim 11, wherein the matching of the cached information of the fingerprinted RTP packets to a remainder of the incoming packets comprises matching information including one of a Synchronization Source, SSRC, identifier and a Contributing Source, CSRC, identifier obtained from the fingerprinted RTP packets with information within a header of each of the remainder incoming packets.

## Patentansprüche

1. Verfahren zur Identifizierung eines Datenstroms eines Echtzeit-Transportprotokolls, RTP, in einer Vorrichtung (100), die mit einem digitalen Netzwerk verbunden ist, wobei das Verfahren Folgendes umfasst:
Erstellung eines Fingerabdrucks von ersten RTP-Paketen in einem Datenstrom, der von der Vorrichtung empfangen wird, durch Überwachung einer vorgegebenen Anzahl von ersten ankommenden Paketen des Datenstroms und Puffern von Informationen in Paketen der ersten ankommenden Pakete, die RTP-Kopfteilmuster aufweisen, wobei das Verfahren **dadurch gekennzeichnet ist, dass** es Folgendes umfasst:
Vergleichen der gepufferten Informationen der RTP-Pakete, für die ein Fingerabdruck erstellt wurde, mit nachfolgenden ankommenden Paketen des Datenstroms und
Identifizieren des Datenstroms als RTP-Datenstrom, wenn eine vorbestimmte Anzahl von Übereinstimmungen auftritt.

2. Verfahren nach Anspruch 1, das ferner die Hinzufügung von Dienstqualitätsmarkierungen, QoS, zu dem identifizierten RTP-Datenstrom umfasst, um den Datenstrom als Videodatenstrom oder als Sprachdatenstrom zu identifizieren.

3. Verfahren nach Anspruch 1, wobei die Erstellung von Fingerabdrücken von RTP-Paketen umfasst, dass bestimmte ankommende Pakete ignoriert werden.

4. Verfahren nach Anspruch 3, wobei die ignorierten Pakete folgende Pakete umfassen: Sitzungsübertragungsdienstprogramme für NAT, STUN, Traversale Nutzungsweiterleitungen um NAT, TURN sowie Interaktive Konnektivitätseinrichtung, ICE.

5. Verfahren nach Anspruch 1, das ferner das Markieren des identifizieren RTP-Datenstroms umfasst.

6. Verfahren nach Anspruch 5, wobei der identifizierte RTP-Datenstrom basierend auf dem RTP-Typ markiert wird.

7. Verfahren nach Anspruch 5, wobei der identifizierte RTP-Datenstrom basierend auf dem Steuerport markiert wird.

8. Verfahren nach Anspruch 5, wobei die ankommenden Pakete Pakete des Benutzerdatengrammprotokolls, UDP, sind.

9. Verfahren nach Anspruch 1, wobei der Vergleich der gepufferten Informationen der RTP-Pakete, für die ein Fingerabdruck erstellt wurde, mit einem Rest der ankommenden Pakete Folgendes umfasst: Vergleichen eines Synchronisationsquellenkennzeichens, SSRC, das von den Paketen erhalten wird, für die ein Fingerabdruck erstellt wurde, mit Informationen in einem Kopfteil jedes der restlichen ankommenden Pakete.

10. Verfahren nach Anspruch 1, wobei der Vergleich der gepufferten Informationen der RTP-Pakete, für die ein Fingerabdruck erstellt wurde, mit einem Rest der ankommenden Pakete Folgendes umfasst: Vergleichen eines Synchronisationsquellenkennzeichens, SSRC, oder eines Beitragsquellenkennzeichens, CSRC, die von den Paketen erhalten werden, für die ein Fingerabdruck erstellt wurde, mit Informationen in einem Kopfteil jedes der restlichen ankommenden Pakete.

11. Maschinenlesbares Medium, das einen Satz von Befehlen aufweist, der in nichtflüchtiger Form darin gespeichert ist und der, wenn er in einer Vorrichtung (100), die mit einem digitalen Netzwerk (500) verbunden ist, ausgeführt wird, veranlasst, dass ein Satz von Operationen durchgelührt wird, der Folgendes umfassen:
Erstellung eines Fingerabdrucks von ersten RTP-Paketen in einem Datenstrom, der von der Vorrichtung empfangen wird, durch Überwachung einer vorgegebenen Anzahl von ersten ankommenden Paketen des Datenstroms und Puffern von Informationen in Paketen der ersten ankommenden Pakete, die RTP-Kopfteilmuster aufweisen, wobei das maschinenlesbare Medium durch Folgendes gekennzeichnet ist:
Vergleichen der gepufferten Informationen der RTP-Pakete, für die ein Fingerabdruck erstellt wurde, mit nachfolgenden ankommenden Paketen des Datenstroms und
Identifizieren des Datenstroms als RTP-Datenstrom, wenn eine vorbestimmte Anzahl von Übereinstimmungen auftritt,
und
Markieren des identifizierten RTP-Datenstroms.

12. Maschinenlesbares Medium nach Anspruch 11, wobei die Erstellung von Fingerabdrücken von RTP-Paketen ferner umfasst, dass bestimmte Pakettypen ignoriert werden, einschließlich folgender Pakete: Sitzungsübertragungsdienstprogramme für NAT, STUN, Traversale Nutzungsweiterleitungen um NAT, TURN, und Interaktive Konnektivitätseinrichtung, ICE.

13. Maschinenlesbares Medium nach Anspruch 11, wobei der identifizierte RTP-Datenstrom basierend auf dem RTP-Typ markiert wird.

14. Maschinenlesbares Medium nach Anspruch 11, wobei der identifizierte RTP-Datenstrom basierend auf dem Steuerport markiert wird.

15. Maschinenlesbares Medium nach Anspruch 11, wobei der Vergleich der gepufferten Informationen der RTP-Pakete, für die ein Fingerabdruck erstellt wurde, mit einem Rest der ankommenden Pakete Folgendes umfasst: Vergleichen eines Synchronisationsquellenkennzeichens, SSRC, das von den Paketen erhalten wird, für die ein Fingerabdruck erstellt wurde, mit Informationen in einem Kopfteil jedes der restlichen ankommenden Pakete.

16. Maschinenlesbares Medium nach Anspruch 11, wobei der Vergleich der gepufferten Informationen der RTP-Pakete, für die ein Fingerabdruck erstellt wurde, mit einem Rest der ankommenden Pakete Folgendes umfasst: Vergleichen von Informationen, die ein Synchronisationsquellenkennzeichen, SSRC, oder ein Beitragsquellenkennzeichen, CSRC, umfassen und von den RTP-Paketen erhalten werden, für die ein Fingerabdruck erstellt wurde, mit Informationen in einem Kopfteil jedes der restlichen ankommenden Pakete.

## Revendications

1. Un procédé d'identification d'un flux de protocole de transmission en temps réel, RTP, dans un dispositif (100) rattaché à un réseau numérique, le procédé comprenant :
le marquage par une empreinte de paquets RTP initiaux dans un flux reçu par le dispositif par la surveillance d'un nombre prédéfini de paquets entrants initiaux du flux et la mise en mémoire tampon de informations à l'intérieur de paquets parmi les paquets entrants initiaux possédant des motifs d'en-tête RTP, le procédé étant **caractérisé en ce qu'**il comprend :
la mise en correspondance des informations placées en mémoire tampon des paquets RTP marqués d'une empreinte avec des paquets entrants subséquents du flux, et
l'identification du flux en tant que flux RTP si un nombre prédéterminé de mises en correspondance se produisent.

2. Le procédé selon la Revendication 1, comprenant en outre l'ajout de balises de qualité de service, QoS, au flux RTP identifié de façon à identifier le flux en tant que flux vidéo ou en tant que flux vocal.

3. Le procédé selon la Revendication 1 où le marquage par une empreinte de paquets RTP comprend la non-prise en compte de certain paquets entrants.

4. Le procédé selon la Revendication 3 où les paquets non pris en compte comprennent des paquets de services de voyage de session pour NAT, STUN, de traversée au moyen de relais autour de NAT, TURN, et d'établissement de connectivité interactive, ICE.

5. Le procédé selon la Revendication 1 comprenant en outre le balisage du flux RTP identifié.

6. Le procédé selon la Revendication 5 où le flux RTP identifié est balisé en fonction du type de RTP.

7. Le procédé selon la Revendication 5 où le flux RTP identifié est balisé en fonction du port de commande.

8. Le procédé selon la Revendication 5 où les paquets entrants sont des paquets de protocole de datagramme utilisateur, UDP.

9. Le procédé selon la Revendication 1, où la mise en correspondance des informations placées en mémoire tampon des paquets RTP marqués d'une empreinte avec une partie restante des paquets entrants comprend la mise en correspondance d'un identifiant de source de synchronisation, SSRC, obtenu à partir des paquets RTP marqués d'une empreinte avec des informations à l'intérieur d'un en-tête de chacun des paquets entrants restants.

10. Le procédé selon la Revendication 1, où la mise en correspondance des informations placées en mémoire tampon des paquets RTP marqués d'une empreinte avec une partie restante des paquets entrants comprend la mise en correspondance d'un élément parmi un identifiant de source de synchronisation, SSRC, et un identifiant de source de contribution, CSRC, obtenu à partir des paquets RTP marqués d'une empreinte avec des informations à l'intérieur d'un en-tête de chacun des paquets entrants restailts.

11. Un support lisible par ordinateur possédant un ensemble d'instructions conservées en mémoire sous une forme non volatile sur celui-ci, qui, lorsqu'elles sont exécutées sur un dispositif (100) rattaché à un réseau numérique (500) amènent un ensemble d'opérations à être exécutées comprenant :
le marquage par une empreinte de paquets RTP initiaux dans un flux reçu par le dispositif par la surveillance d'un nombre prédéfini de paquets entrants initiaux du flux et la mise en mémoire tampon d'informations à l'intérieur de paquets parmi les paquets entrants initiaux possédant des motifs d'en-tête RTP, le support lisible par ordinateur étant **caractérisé par** :
la mise en correspondance des informations placées en mémoire tampon des paquets RTP marqués d'une empreinte avec des paquets entrants subséquents du flux, et
l'identification du flux en tant que flux RTP si un nombre prédéterminé de mises en correspondance se produisent, et
le balivage du flux RTP identifié.

12. Le support lisible par ordinateur selon la Revendication 11 où le marquage par une empreinte des paquets RTP comprend en outre la non-prise en compte de certains types de paquets comprenant des paquets de services de voyage de session pour NAT, STUN, de traversée au moyen de relais autour de NAT, TURN, et d'établissement de connectivité interactive, ICE.

13. Le support lisible par ordinateur selon la Revendication 11 où le flux RTP identifié est balisé en fonction du type de RTP.

14. Le support lisible par ordinateur selon la Revendication 11 où le flux RTP identifié est balisé en fonction du port de commande.

15. Le support lisible par ordinateur selon la Revendication 11, où la mise en correspondance des informations placées en mémoire tampon des paquets RTP marqués d'une empreinte avec une partie restante des paquets entrants comprend la mise en correspondance d'un identifiant de source de synchronisation, SSRC, obtenu à partir des paquets RTP marqués d'une empreinte avec des informations à l'intérieur d'un en-tête de chacun des paquets entrants restants.

16. Le support lisible par ordinateur selon la Revendication 11, où la mise en correspondance des informations placées en mémoire tampon des paquets RTP marqués d'une empreinte avec une partie restante des paquets entrants comprend la mise en correspondance d'informations comprenant un élément parmi un identifiant de source de synchronisation, SSRC, et un identifiant de source de contribution, CSRC, obtenu à partir des paquets RTP marqués d'une empreinte avec des informations à l'intérieur d'un en-tête de chacun des paquets entrants restants.
